# EUROPEAN PATENT APPLICATION

(11) **EP 3 054 581 A1**
(43) Date of publication of application: **10.08.2016**
(21) Application number: 16161475.5
(22) Date of filing: 11.12.2013
(51) Int. Cl.: H02N 2/18

(54) **VOLTAGE GENERATION FOR ELECTRICAL DEVICES**

(30) Priority: 11.12.2012 GB 201222271
(62) Divisional of application: 13802412.0
(71) Applicant: Linde Aktiengesellschaft, 80331 München (DE)
(72) Inventor: HOLBECHE, Thomas Bickford, Church Crookham, Hampshire GU52 8TJ (GB)
(74) Representative: Boult Wade Tennant

(57) **Abstract**

An apparatus for generating voltage from a compressed gas. A reciprocable shuttle member is arranged to oscillate within a housing under the action of gas pressure. The shuttle member impacts on a piezoelectric member thereby causing voltage to be generated from the piezoelectric member.

## Description

This invention relates to an apparatus and a method for generating voltage. It also relates to an electrical device, particularly a non-thermal plasma generator, incorporating such voltage generation apparatus.

It is well known that stand-alone, hand-held, electrical devices may be powered by disposable or rechargeable electrical batteries. Such batteries can add to the bulk and weight of the hand-held device. Disposable electrical batteries are deemed nowadays to require special disposal or reclamation facilities because batteries contain substances or components which are of a toxic or polluting nature. Similar issues arise when disposing of an electrical device that contains a rechargeable battery.

It is an aim of the present invention to provide an alternative apparatus and method for generating voltage.

According to the present invention there is provided apparatus for generating voltage comprising a piezoelectric member and a reciprocable shuttle member operable by an oscillating gas pressure to cause there to be made a series of voltage generating impacts on the piezoelectric member.

The invention also provides a method of generating a voltage comprising producing an oscillating gas pressure and causing the oscillating gas pressure to act on a reciprocal shuttle member so as to cause there to be made a series of voltage generating impacts on a piezoelectric member.

Although it is possible to generate the oscillating gas pressure by other means, it is preferred that the reciprocable shuttle member is also operable to cause the oscillating gas pressure to be created.

The oscillating gas pressure is to be created by repeatedly opening and closing a valve in an outlet from a pressure vessel containing compressed gas.

The shuttle member is preferably adapted to reciprocate within a cylinder between a voltage generating position and a gas supply position. The apparatus preferably comprises a spring biasing the reciprocable shuttle member into a gas supply position. In brief, the shuttle member is urged by the spring to actuate a valve controlling the flow of gas out of a vessel containing compressed gas. The pressure of the gas so released then overcomes the bias of the spring to return the shuttle to cause a voltage generating impact on the piezoelectric member. The return stroke of the shuttle member releases the pressure on the valve of the vessel containing the compressed gas and thus causes that valve to close again. Accordingly, the gas pressure acting on the shuttle member falls to a level such that after completing its voltage generating stroke, the bias of the spring causes the shuttle member to repeat its valve opening stroke. Thus the shuttle member repeatedly reciprocates and a series of voltages pulses is thereby created. The apparatus for generating voltage according to the invention is preferably also used to supply gas. Accordingly, the apparatus is typically arranged such that a first end of the reciprocable shuttle member bounds one end of a gas chamber within the cylinder, the gas chamber communicating with a gas supply passage.

Preferably the apparatus according to the invention comprises means for holding the reciprocable shuttle member out of its gas supply position when the apparatus is not in use, and means for releasing the hold when it is desired to operate the apparatus. In one such arrangement, the holding means preferably a latching rod which in a latching position holds, against the bias of the said spring, the reciprocable shuttle member out of its gas supply position, and the releasing means is a spring-loaded lever manually operable to withdraw the latching rod from its latching position and thereby release the reciprocable shuttle member.

Preferably the manually operable lever is pivoted to a block that is in engagement with the cylinder.

There is desirably means for overriding the releasing means in the event of the pressure in the gas supply passage reaching a chosen (maximum) value. In one such arrangement the means for overriding the releasing means preferably comprises a spring-loaded gas pressure regulating piston for controlling the pressure in the gas passage, the bias of the loading spring opposing translation of the piston by the pressure of the gas in the gas passage, the pressure regulating piston having a configuration able to actuate means for relatching the reciprocable shuttle member. The pressure regulating piston may, for example, be adapted to engage a shoulder or other projection from the latching pin and to urge it under the pressure of the gas in the gas passage to relatch the reciprocable shuttle member. The pressure regulating piston is typically arranged to be translatable within the bore in the block to which the latching rod is pivoted, the bore communicating with the gas passage. Preferably an adjusting member is provided for adjusting the pressure exerted by the spring loading the pressure regulating piston. Accordingly, a user can set the pressure at which the shuttle member is relatched. It is a consequence that gas cannot be supplied from the gas passage at a higher pressure.

In a typical arrangement of the apparatus according to the invention, a first end of the cylinder engages a holder of the piezoelectric member and a second end of the cylinder is adapted to engage a vessel containing compressed gas. Preferably, the reciprocable shuttle member is integral with a striking rod configured to make the voltage generating impacts on the piezoelectric member. Although it is possible for the other end of the shuttle member to act directly on the valve to release compressed gas into the chamber, it is preferred that the face of the reciprocable shuttle member remote from the piezoelectric member acts under the bias of the shuttle member spring against an actuating pin to cause gas to be supplied to the chamber. The actuating pin is preferably mounted in a bore extending through a holder, the bore defining a gas path through the holder, the holder engaging the cylinder.

The invention also provides an assembly for the above-described apparatus and a pressure vessel containing compressed gas. The pressure vessel is typically small size, having a water capacity of less than 100cm³, or preferably less than 25cm³.

The pressure vessel is preferably a hollow bulb containing the compressed gas, the hollow bulb having a mouth engaging fluid-type a valve which is a valve member normally biased into a valve-closing position, but which, when it is desired to deliver gas, is able to be urged by the application for sufficient external pressure into a position into which the valve is open.

The valve preferably comprises a sleeve, the inner end of which forms a valve seat; a valve member adapted to make a fluid-tight engagement with the valve seat when the valve is in a closed position, a spindle integral with or carrying the valve member, the spindle having a head against which the external valve-opening pressure can be exerted, and a compression spring which acts on the spindle and a valve-closing direction. Accordingly, in the assembly according to the invention the actuating pin abuts upon the head of the spindle.

A mouth of the bulb is preferably defined by an elongate nozzle integral with the head of the bulb. The nozzle typically has an external screw thread engaging a complementary screw thread at the second end of the cylinder.

The invention also provides an electrical device including an apparatus according to the invention or an assembly according to the invention. The size and mass of the apparatus or assembly are preferably such that the device is able to be hand held in operation.

The apparatus and assembly according to the invention are particularly useful when the electrical device is required to deliver a gas and is required to be independent of both an external electrical power supply and an external gas supply. An electrical device according to the invention is able to have its own internal gas supply and to use that gas supply to generate voltage pulses.

An example of where these advantages may come into their own is where the electrical device is required to produce and deliver a (non-equilibrium) gaseous plasma. In accordance with the invention such an electrical device may include a plasma generator able to be placed in electrical circuit with the piezoelectric member, the plasma generator including a plasma generating chamber communicating with the gas passage, a plasma generating chamber having an outlet for discharging of the plasma from the device.

Such a device may be used therapeutically, for example, to treat wounds, or for oral care, including but not limited to the whitening of teeth.

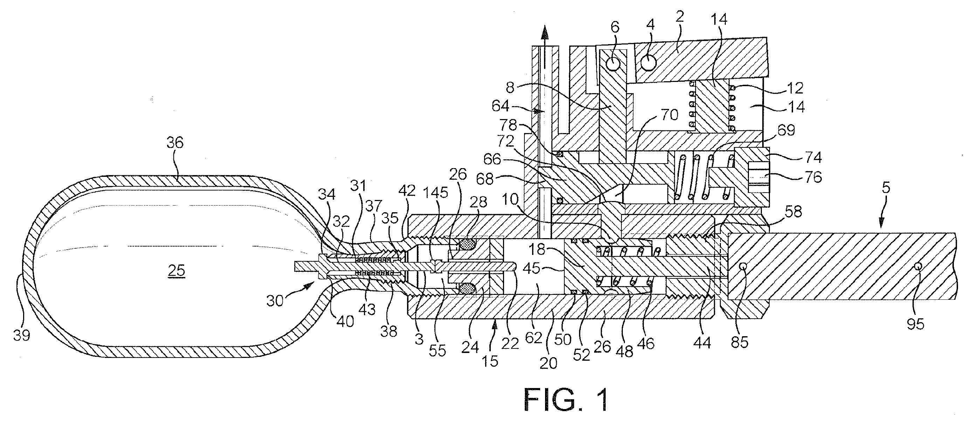

A voltage generating apparatus and assembly according to the invention is now described by way of example with reference to Figure 1 of the accompanying drawings, which is a sectional side elevation of the piezoelectric apparatus.

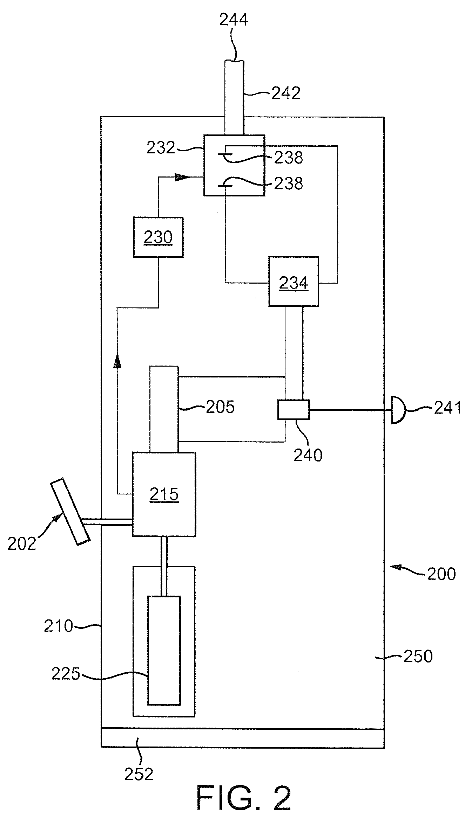

An electrical device according to the invention will also be described below by way of example with reference to Figure 2 of the accompanying drawings which is a schemer of an electrical device incorporating the assembly shown in Figure 1 of the drawings.

The drawings are not to scale.

Referring to Figure 1, there is illustrated an assembly of the piezoelectric member 5, a mechanism 15 for repeatedly striking the piezoelectric member 5 so as to cause a series of voltage-generating deformations of the member 5, and a small pressure vessel 25 containing compressed gas.

The piezoelectric member may take any one of a number of well known forms. The piezoelectric member 5 has a particular crystalline structure. This enables electricity to be produced when a stress is applied. Although the piezoelectric member 5 may be a crystal of a naturally occurring substance such as quartz or Rochelle salt, it is preferred that it be formed of man-made ceramic material, typically one with a perovskite or tungsten-bronze structure. Examples include barium titanate, lead zirconate titanate, commonly known as PZT, and sodium tungstate. The piezoelectric member preferably comprises an assembly of discs of such ceramic material, the discs being bonded together face-to-face. Such bonded structures are well known commercially. They are typically capable of producing visible voltage pulses depending on the size of the stress to which they are subjected. Voltage tappings may be taken from opposite ends of or any other suitable points on the piezoelectric member 5, for example at points 85 and at 95. The voltage may be applied to any suitable electrical circuit as will be described below.

The mechanism 15 is hand-operated. It includes a manually-operable actuating lever 2. An operator may use his or her thumb to depress lever 2 so as to start operation of the assembly shown in Figure 1. The lever 2 is pivoted by a pin 4 to a block 14 which is bolted or otherwise secured to a cylinder 20. Manual depression of the lever 2 is opposed by the bias of a compression spring 12 which is housed in a bore of the block 14. The lever 2 is at its end remote from a compression spring 12 is connected by a connecting pin 6 to a rod 8 having a domed end 10 which is adapted to engage a complementary groove in a skirt 48 which is integral with shuttle member 18. When the assembly is not operating, the domed end 10 of the rod 8 latches the shuttle member 18 so that it cannot reciprocate within the cylinder 20. Manual depression of the lever 2, however, will release the reciprocable shuttle member 18 and cause it to operate as shall be described below.

A holder 60 engages one end of the piezoelectric member 5. The holder 60 itself is in screw-threaded engagement with the adjacent end of the cylinder 20. If desired, instead of the arrangement shown in Figure 1, the piezoelectric member 5 may be completely housed within the holder.

The reciprocating shuttle member 18 has an integral striker rod 44 which is adapted to strike against the piezoelectric member 5. The opposite face 45 of the shuttle member 18 is adapted to impact, in operation, against an actuating pin 22 which causes gas to be released from the vessel 25 into a chamber 62 bounded at one of its ends by the disc 45 of the shuttle member 18.

The actuating pin 22 is engaged by a holder 24 which is in screw threaded engagement with the inner wall of the cylinder 20. The actuating pin 22 makes frictional engagement with a bore 26 through the holder 24. Axial or other flow grooves may be formed in the actuating pin 22 or the bore 26 so as to ensure that gas released from the pressure vessel 25 can pass through the bore 26 (or both), in operation, into a chamber 62 within the cylinder 20.

The shuttle member 18 is biased by a compression spring 46 which is positioned around the striker rod 44 of the shuttle member 18 and seats against an annular guide member 58, through which the striker rod 44 is able to extend and which is in screw threaded engagement with the inner wall of the cylinder 20. When assembling the mechanism 15 the axial position of the guide 58 within the cylinder 20 can be adjusted so as to set the biasing force exerted by the compression spring 46 on the shuttle member 18. When the shuttle member 18 is released by manual depression of the lever 2 so as to raise the rod 8, the bias of the compression spring 46 urges the shuttle member 18 towards the actuating pin 22 and causes it to strike the pin 22. This creates a force which is effective to open the pressure vessel 25 and allow gas to flow therefrom under pressure through the bore 26 into the chamber 62. This in turn creates a gas pressure in the chamber 62 which urges the shuttle member 18 in the opposite direction against the bias of the compression spring 46 and causes the striker 44 to make a voltage-generating strike on the piezoelectric member 5.

In operation, gas flows out of the chamber 62 through a gas passage 64 which is typically formed in the block 14. Escape of gas under pressure from the chamber 62 along the outer periphery of the shuttle member 18 is prevented by low-friction O-ring seals 50 and 52. The holder 24 is also provided with an 0-ring seal 28 so as to prevent passage of gas through its peripheral screw threads.

In operation, the face 45 of the shuttle member 18 remains in engagement with the pin 22 until the pressure in the chamber 62 exceeds the biasing pressure of the compression spring 46 and causes the shuttle member 18 to move back out of engagement with the pin 22. Once the pin 22 is released, the supply of gas from the pressure vessel 25 ceases. However, a gas pressure is retained in a further chamber 55 on the pressure vessel side of the holder 24. The flow of gas from the chamber 55 through the bore 26 maintains the pressure in the chamber 62 high enough for a sufficient period of time to cause the shuttle member 18 to make a full return stroke and thus another voltage-generating strike on the piezoelectric member 5.

The chamber 62 exhausts through the gas passage 64, which gas passage may be used to supply gas to another apparatus or to another part of a device of which the assembly shown in Figure 1 forms a part. In the event of an excessive gas pressure building up in the passage 64, a pressure control piston 66 operates to relatch the shuttle member 18. The piston 66 is housed within a complementary bore within the block 14. The piston 66 has a nose 68 which extends into the passage 64 serving to obstruct but not completely block that passage. (This helps to retain the gas pressure within the chamber 62 and thus ensure that the pressure in the chamber 62 does not in operation fall to the level of the biasing pressure exerted by the compression spring 46 until the striker rod 44 has impacted upon the piezoelectric member 5.

Should the egress of gas from the passage 64 be prevented or sufficiently reduced in rate that the pressure rises in the passage 64 to a chosen maximum, the piston 66 will be displaced by the gas pressure against the bias of a compression spring 69 causing a tapered side 70 of the piston 66 to engage a shoulder 72 or other projection from the rod 8. Continued motion of the piston 66 against the bias of the compression spring 68 causes the piston 66 to use the domed end 10 of the rod 8 into a position in which it catches again the shuttle member 18. Once the pressure in the gas passage 64 falls, the compression spring urges the piston 66 out of engagement with the shoulder 72 of the rod 8 and thus continued finger pressure by the operator on the lever 2 again releases the shuttle member 18 and the assembly once more can start to generate voltage pulses and deliver gas. The compression spring 69 is seated on an adjuster 74. The adjuster 74 is in screw threaded engagement with the block 14. The position of the adjuster 74 may be set so as to select the pressure in the gas passage 64 at which the shuttle member 18 is relatched. The adjuster 74 is provided with a slot 76 for insertion of an Allen key (not shown) to make this adjustment. The head of the piston 66 is provided with an O-ring seal 78 in order to prevent leakage of gas from the passage 64 therepast.

The mechanism 15 is capable of being set up so that the shuttle member 18 reciprocates at or close to the natural resonant frequency of the piezoelectric device 5 thereby enabling larger voltage pulses to be produced than if the piston 18 were to resonate at a substantially different rate from the natural resonant frequency of the piezoelectric device 5.

The pressure vessel 25 comprises a hollow cylindrical bulb or capsule 36 which is symmetrical about its longitudinal axis and which has a head 37 and a domed base 39. The bulb 36 has at an elongate nozzle 42 which is integral with the head 37 and defines the mouth of the bulb 36. The mouth is symmetrical about the longitudinal axis of the bulb 36. The bulb 36 and the nozzle 42 form a one piece article. The bulb 36 is able to store gas at high pressure, for example, a pressure of between 25 and 100 bar. The bulb 36 typically has a water capacity in the range from 5cm³ to 100cm³,preferably 10cm³ to 20 cm³. It is typically made of stainless steel by a deep drawing process. The interior surface of the bulb 36 in the region of its mouth is a screw-threaded engagement with complementary threads of a sleeve 38 which forms the body of a valve 30. The sleeve 38 tapers from its outer to its inner end (relative to the capsule 36). A valve seat 40 is formed at the inner end of the sleeve 38. The valve 30 has a valve member 34 which is integral with a spindle 32 extending within the sleeve 38. The spindle 32 is coaxial with the bulb 36. The valve 30 additionally includes a compression spring 43. One end of the compression spring 43 engages a seat 31 which is integral with the sleeve 38. The other end of the compression spring 43 bears against a collar 35 which is integral with the spindle 32. The compression spring 43 exerts a spring pressure against the collar 35 in a valve-closing direction. The spindle 32 extends beyond the sleeve 38 and ends in a head 145. Application of a sufficient external pressure to the head 145 (through the pin 22) causes the valve member 34 to be displaced against the bias of the compression spring 43 out of valve closing engagement with the valve seat 40. Compressed gas is thus able to flow through the valve 30 into the chamber 55 (which is circumscribed by the nozzle 42). The nozzle 42 has external screw threads which engage complementary threads on the inner surface of the cylinder 20 at its end remote from the piezoelectric member 5.

In operation, when the face 45 of the shuttle member 18 strikes or bears against the actuating pin 22, the pin 22 acts on the head 145 of the spindle 32 and causes opening of the valve 30 to release gas into the volume 55 and from there through the bore 16 into the chamber 62. Translation of the shuttle member 18 out of engagement with the pin 22 results in the compression spring 43 returning the valve 30 to its closed position to cease supply of gas to the chamber 55. The repeated release of gas from the compressed gas vessel 25 therefore causes the shuttle member to reciprocate and cause the generation of repeated voltage pulses.

A user of the assembly or apparatus shown in Figure 1 is required to keep the lever 4 depressed for the entire period of time in which it is desired to generate voltage pulses. Release of the lever 4 causes the rod 8 to engage a latch, the shuttle member 18 thus preventing it from being displaced.

Referring to Figure 2, a device 200 is shown for generating a non-thermal or non-equilibrium gaseous plasma to temperature which is tolerable to the human body, for example a temperature under 40°C and more preferably under 35°C, but not so low as, say, 5°C. A flow of gas plasma is generated and emitted from the device 200 generally at atmospheric pressure. The device 200 comprises a housing 210 in which are located a number of different components which are operable together to form and eject the non-thermal gaseous plasma from the device 200. The housing 210 therefore holds an assembly of a piezoelectric member 205, a mechanism 215, and a pressure vessel 225 containing compressed gas. This assembly is essentially identical to the assembly shown in and described with reference to Figure 1. The mechanism 215 discharges gas from the vessel 225. This gas flows through a pressure regulator, orifice plate or flow control valve 230 into a plasma generator 232. Voltage pulses are supplied from the piezoelectric member 205 to one or more signal generation circuits 234. One of the signal generation circuits 234 is electrically connectable to gas plasma energising electrode or electrodes 238 and, in operation, generates a signal suitable for a creation of a non-thermal or non-equilibrium plasma as will be described below. In addition to the signal generation circuit associated with the plasma generator 232, there may be separate signal generation circuits associated with monitoring, display and safety functions. The device 200 typically also includes master switch 240 for each of the signal generation circuits. A push button 241 may be provided for opening and closing the switch 240. The device 200 may thus contain two manual controls, namely the push button 241 and a lever 202 forming part of the mechanism 215 and having essentially the same configuration and operation as the lever 2 described with reference to and shown in Figure 1. In another alternative, the push button 241 can be omitted and this function can be incorporated into the lever 202 such that manual depression of the lever actuates the switch 240. It is desirable, however, to build in a time delay to the actuation of the signal generation for the plasma generator 232 in order to ensure that no plasma is created before the air has been flushed out of the plasma generator 232. Indeed, it is further preferred that the gas used for plasma generation contains essentially no oxygen molecules so as to avoid the formation of ozone which has a distinctive odour.

The plasma generator 232 has an outlet for gaseous plasma communicating with an applicator 242 for directing the flow of gaseous plasma from the plasma generator 232 to an outlet opening 244 in the applicator 242.

The device 200 is sized and of a weight such that it can be held and operated by a user by hand and the resulting plasma readily directed by a user to treat a treatment region of an object or human or animal body. A particular advantage of the device is that it is fully portable and is operable without the requirement for an external gas supply or an external supply of electrical power. A self-contained arrangement of the device 200 allows easy use in a domestic environment, for instance, in a bathroom.

In order that the device 200 is suitable to be held and operated by hand, it should not exceed an upper size or an upper weight. The device as a whole may be approximately 30cm in length and 5cm in diameter. Any size of housing 210 significantly above 5cm diameter renders the device uncomfortable to hold and use for many users. The upper limit on the length is determined by a need for the device not to be unwieldy. It will also be appreciated that if the device is used to treat, say, teeth, the device must be readily insertable into a user's mouth (or the mouth of a patient if the user is a dentist or dental nurse). The device preferably has a length not in excess of 20cm. Preferably the housing 210 is contoured so that it can be held comfortably in the palm of the hand. The mass of the housing, or the device as a whole is preferably less than 1 kg. The device 200 may be configured for use in a single treatment and then be disposable. In this regard, the components of the device are selected for only a single treatment. As a single treatment may require less gas, the pressure vessel can be of a minimum size and weight. It is preferred, however, that the device 200 be reusable.

The housing 210 preferably comprises a chamber 250 for locating the piezoelectric member 205 and engaging it with the mechanism 215. The housing 210 may also have a removable base 252 to enable ready insertion of a pressure vessel 225 and removal of an exhausted one. The pressure vessel 225 may contain a sufficient amount of gas for generating a plasma plume for at least two minutes. Longer periods of operation are, however, preferable. The balance, however, has to be struck between making the pressure vessel 225 so large and/or so heavy that the device can no longer comfortably be operated by hand and making the pressure vessel such that it cannot hold an adequate volume of gas. We believe that suitable pressure vessels may have a storage pressure in the order of 80 to 100 bar (or higher) and a water capacity in the range from 10cm³ to 100 cm³. In one example the pressure vessel is approximately 100mm in length and 35mm in diameter. The pressure vessel may be made from an aluminium alloy or stainless steel or mild steel or any other suitably robust material.

The plasma generator 232 may typically have a small size and many descriptions of such plasma generators exist in the literature. Although in certain configurations a single electrode 238 may be provided, it is preferred that there are at least two electrodes 238, one being arranged to receive a driving signal and the other being earthed. The signal generator 234 generates an electrical signal for driving or energising the electrodes. At least one, and preferably both or all, of the electrodes are dielectric barrier discharge electrodes insulated from gas in the plasma generator 232 by a dielectric to prevent excessive heating of the plasma caused by continuous or prolonged arcing. Suitable dielectric materials include ceramics, plastics and glass. Insulating the or each electrode reduces the duration of arcing in the plasma chamber when an electric current flows from one electrode through the plasma or gas to the other electrode or each of the other electrodes.

The signal generator 234 may be adapted to match any of one of more different plasma energising modes, for example, AC, DC, or pulsed, and can be capacitively coupled or inductively coupled to the plasma chamber. In one example, the signal generator 234 is configured to generate an RF signal for driving the electrodes 238. The signal generator for this example comprises an RF oscillator which typically has an output at 600V and 13.56MHz or 2.4GHz (the bands used in this area of technology) and is rated at 15W. The signal generator may be configured as a pulsed signal generator to generate a low duty cycle RF signal in which the RF energy is provided to the electrodes for less than 10% of the duty cycle. A low duty cycle helps to preserve electrical energy in the device whilst not significantly affecting the formation of a plasma, since when the output is low, plasma continues to be generated by the cascade of charged particles in the chamber. Alternatively, a timing circuit (not shown) may switch the signal output signal off and on over the required duty cycle. In another alternative, the signal generator 234 is configured to generate a pulsed DC signal output at, for example, 4kV and 8kHz for driving the electrodes 238. One advantage of such an arrangement is that a signal can be relatively simply generated from a kind of voltage signal reduced by a piezoelectric member.

If desired, suitable intermediate electronic components may be incorporated between the piezoelectric member 205 and the signal generator 234 of the plasma generator 232. These electrical components may include diode and transformers to further increase the voltage. Alternatively or in addition a capacitor may be used to store the voltage generated which could in turn in addition to powering the signal generator 234 provide the necessary power for a light emitting diode (LED) to provide an indication light when gas is being drawn from the pressure vessel or to display other functions of the apparatus such as gas pressure in the pressure vessel or elsewhere in the apparatus. In another alternative, referring again to Figure 1, the latching mechanism for the shuttle member 18 may be replaced by electromagnetic means (not shown). For example, a manually operable switch may release an electromagnetic catch in such an arrangement. Displacement of the piston 66 against the bias of the compression spring 78 may operate a microswitch to reenergise the electromagnetic catch.

## Claims

1. Apparatus for generating voltage comprising a piezoelectric member (5) and a reciprocable shuttle member (18) operable by an oscillating gas pressure to cause these to be made a series of voltage generating impacts on the piezoelectric member (5) wherein the reciprocable shuttle member (18) is adapted to reciprocate within a cylinder (20) between a voltage resting position and a gas supply position, the apparatus comprising a spring (46) biasing the reciprocable shuttle member into a gas supply position.

2. Apparatus according to claim 1, wherein a first end of the reciprocable shuttle member (18) bounds one end of a gas chamber (62) within the cylinder, the gas chamber communicating with a gas supply passage.

3. Apparatus according to claim 1, comprising means for holding the reciprocable shuttle member (18) out of its gas supply position when the apparatus is not in use, and means for releasing the hold when it is desired to operate the apparatus.

4. Apparatus according to claim 3, wherein the holding means is a latching a rod (10) which in a latching position holds, against the bias of the said spring, the reciprocable shuttle member out of its gas supply position, and the releasing means is a spring-loaded lever (2) manually operable to withdraw the latching rod from its latching position and thereby release the reciprocable shuttle member.

5. Apparatus according to claim 4, wherein the manually operable lever (2) is pivoted to a block that is in engagement with the cylinder.

6. Apparatus according to any one of claims 3 to 5, when dependent from claim 2, comprising means for overriding the releasing means in the event of the pressure in the gas supply passage reaching a chosen value.

7. Apparatus according to any one of claims 1 to 6, wherein a first end of the cylinder (20) engages a holder of the piezoelectric member (5) and a second end of the cylinder is adapted to engage a vessel (25) containing compressed gas.

8. Apparatus according to claim 7, wherein the reciprocable shuttle member (18) is integral with a striking rod (44) configured to make the voltage generating impacts on the piezoelectric member (5).

9. Apparatus according to any one of the claims 1 to 8, wherein the reciprocable shuttle member (18) has a face (45) remote from the piezoelectric member (5), which face in the gas supply position acts under the bias of the shuttle member spring (46) against an actuating pin (22) to cause gas to be supplied to the chamber.

10. Apparatus according to claim 9, wherein the actuating pin (22) is mounted in a bore (26) extending through a holder, the bore defining a gas path through the holder, the holder engaging the cylinder (20).

11. An assembly of an apparatus according to any one of the preceding claims and a pressure vessel containing compressed gas.

12. An electrical device including an apparatus according to any one of claims 1 to 10 or an assembly according to claim 11.

13. An electrical device according to claim 12, wherein the device is able to be hand-held in operation.

14. An electrical device according to claims 12 or claim 13, wherein the electrical device is able to produce and deliver a non-equilibrium gaseous plasma and includes a plasma generator able to be placed in electrical circuit with the piezoelectric member, the plasma generator including a plasma generating chamber communicating with the gas passage, the plasma generating chamber having an outlet for discharging the plasma from the device.
